# EUROPÄISCHE PATENTSCHRIFT

(11) **EP 1 576 023 B1**
(45) Veröffentlichungstag und Bekanntmachung des Hinweises auf die Patenterteilung: **23.08.2006**
(21) Anmeldenummer: 03813577.8
(22) Anmeldetag: 18.12.2003
(51) Int. Cl.: C08G 12/42

(54) **DIREKTSYNTHESEVERFAHREN ZUR HERSTELLUNG VON VERETHERTEN MELAMINHARZKONDENSATEN, MELAMINHARZKONDENSATE UND DEREN VERWENDUNG**
DIRECT SYNTHESIS METHOD FOR THE PRODUCTION OF ETHERIFIED MELAMINE RESIN CONDENSATES, MELAMINE RESIN CONDENSATES, AND USE THEREOF
PROCEDE DE SYNTHESE DIRECTE POUR PREPARER DES CONDENSATS DE RESINE DE MELAMINE ETHERIFIES, CONDENSATS DE RESINE DE MELAMINE AINSI OBTENUS ET LEUR UTILISATION

(30) Priorität: 19.12.2002 DE 10261804
(43) Veröffentlichungstag der Anmeldung: 21.09.2005
(73) Patentinhaber: AMI Agrolinz Melamine International GmbH, 4021 Linz (AT)
(72) Erfinder: PFEIFFER, Steffen, A-4030 Linz (AT); RÄTZSCH, Manfred, A-4073 Wilhering (AT); BUCKA, Hartmut, A-4622 Eggendorf (AT); TAPPEINER, Günter, 4020 Linz (AT)
(74) Vertreter: Gross, Felix
(86) Internationale Anmeldenummer: PCT/EP2003/014454
(87) Internationale Veröffentlichungsnummer: WO 2004/056900

(56) Entgegenhaltungen:
- WO-A-02/40564

## Beschreibung

Die Erfindung betrifft ein Direktsyntheseverfahren für veretherte Melaminharzkondensate nach dem Oberbegriff des Anspruchs 1, eine Verwendung der Melaminharzkondensate nach Anspruch 23 und Melaminharzkondensate nach Anspruch 24.

Direktsyntheseverfahren zur Herstellung von veretherten Melaminharzkondensaten sind bekannt.

Nach DE-OS 25 16 349 und der US-A 4,425,466 lassen sich veretherte Methylolaminotriazine durch Umsetzung von Aminotriazinen mit Formaldehyd und Alkoholen in Gegenwart von starken organischen Säuren bei 80 bis 130°C herstellen. Der Einsatz von Ionenaustauschern bei der Direktherstellung veretherter Formaldehydharze wird in der BE-A 623 888 beschrieben. Der Nachteil bei diesen bekannten Verfahren besteht darin, dass sich nach diesen Verfahren keine höherkondensierten Melaminharzether herstellen lassen und die gebildeten Melaminharzether noch an die Triazinringe der Melaminharzkondensate gebundene Hydroxymethylenaminogruppen und Triazinringe verknüpfende -NH-CH₂-O-CH₂-NH- Gruppen enthalten, was bei der Aushärtung zur Abspaltung von Formaldehyd und Bildung von Mikrorissen in den Formstoffen und Beschichtungen führt.

Es ist die Aufgabe der Erfindung, ein Direktsyntheseverfahren zur Herstellung von veretherten Melaminharzkondensaten zu schaffen, wobei die Melaminharzkondensate mittlere Molmassen von 500 bis 50000 aufweisen und die Melaminharzkondensate frei von an den Triazinringe gebundenen Hydroxymethylenaminogruppen und die Triazinringe verknüpfenden -NH-CH₂-O-CH₂-NH- -Gruppen sind.

Die Aufgabe wird durch ein Direktsyntheseverfahren gelöst, bei dem
a) in einem ersten Reaktionsschritt ein verethertes Melaminharzvorkondensat in alkoholischer Lösung hergestellt wird,
b) das veretherte Melaminharzvorkondensat in alkoholischer Lösung in mindestens einem Verdampfungsschritt aufkonzentriert wird, wobei dem Melaminharzvorkondensat vor, während und/oder nach dem Aufkonzentrieren C₄-C₁₈ -Alkohole, Diole vom Typ HO-R-OH und / oder vierwertige Alkohole auf der Basis von Erythrit zugesetzt werden,
c) in einem zweiten Reaktionsschritt das aufkonzentriete Melaminharzvorkondensat in einem Mischer, insbesondere einem Kneter umgesetzt wird.

In einer vorteilhaften Ausgestaltung des erfindungsgemäßen Verfahrens wird das veretherte Melaminharzkondensat nach dem zweiten Reaktionsschritt ausgetragen und granuliert.

Mit Vorteil wird im ersten Reaktionsschritt Methanol als Alkohol verwendet. Es gibt vorteilhafterweise zwei Möglichkeiten, die Methylolierung und die Veretherung durchzuführen.

Einmal werden die Methylolierung und die Veretherung hintereinander ausgeführt, zum anderen werden die Methylolierung und die Veretherung gleichzeitig ausgeführt.

Bei der ersten Möglichkeit wird z.B. das Melamin durch Zugabe einer Formaldehydkomponente, wie beispielsweise Formaldehyd oder eine Mischung aus Formaldehyd und Methanol, bei einem bevorzugten pH-Wert von etwa 7 bis 9 zuerst methyloliert und das so erhaltene Methylolmelamin anschließend unter sauren Bedingungen mit einem Alkohol, bevorzugt Methanol, verethert. Die Veretherung findet dabei bevorzugt bei Temperaturen zwischen 70 und 160°C, Drücken zwischen 1,3 bis 20 bar und einem bevorzugten pH-Wert zwischen 5,5 und 6,5 statt. Die Reaktionszeit kann zwischen wenigen Sekunden bis 1 Stunde variiert werden, typischerweise beträgt sie 5 bis 40 Minuten. Damit ist kontinuierliche und / oder diskontinuierliche Fahrweise möglich.

Die zweite Möglichkeit besteht darin, dass im ersten Reaktionsschritt die Methylolierung und die Veretherung gleichzeitig stattfinden. Der für die Veretherung eingesetzte Alkohol ist z.B. Methanol. Dabei wird z.B. durch Eintragen von Melamin in Methanol oder Mischungen aus 5 bis 95 Massen-% Methanol und 95 bis 5 Massen-% C₄-C₈-Kohlenwasserstoffen bei einer Temperatur zwischen 30 und 95°C eine 10 bis 60 Massen-% Melamin enthaltende Dispersion hergestellt. Nach Einstellung eines pH-Werte von 5,5 bis 6,5 wird als eine Formaldehydkomponente eine wässrige Formaldehydlösung mit einer Formaldehydkonzentration von 35 bis 55 Massen-% und / oder p-Formaldehyd zudosiert. Die Formaldehydlösung kann bis zu 15 Massen-% Methanol enthalten. Das Reaktionsgemisch wird bei einer Reaktionstemperatur zwischen 70°C und 110°C, einem Druck zwischen 1,3 und 5 bar und einer Reaktionszeit von 5 bis 40 Minuten zu veretherten Melaminvorkondensaten umgesetzt. Die so erhaltene alkoholische Lösung des veretherten Melaminharzvorkondensates wird auf 40 bis 60 °C abgekühlt.

Vorteilhafterweise liegt das Molverhältnis Melamin / Formaldehyd zwischen 1: 2 und 1:4. Das Molverhältnis Melamin / Methanol liegt vorteilhafterweise zwischen 1:10 und 1:20. Diese Molverhältnisse gelten für beide Möglichkeiten der Durchführung des ersten Reaktionsschrittes.

Besonders geeignete C₄-C₈-Kohlenwasserstoffe zur Dispergierung von Melamin in Mischungen aus 5 bis 95 Massen-% Methanol und 95 bis 5 Massen-% C₄-C₈-Kohlenwasserstoffe im ersten Reaktionsschritt sind: Isobutan, Pentan, Heptan und / oder Isooktan.

Im ersten Reaktionsschritt einer Ausführungsform des erfindungsgemäßen Verfahrens ist als Formaldehydkomponente eine Mischung aus 35 Massen-% Formaldehyd, 15 Massen-% Methanol und 50 Massen-% Wasser eingesetzt. Alternativ kann im ersten Reaktionsschritt auch eine Mischung aus 50 Massen-% Formaldehyd und 50 Massen-% Wasser eingesetzt werden.

Als Formaldehydkomponente kann im ersten Reaktionsschritt auch Paraformaldehyd eingesetzt werden.

Die im ersten Reaktionsschritt bevorzugte Reaktionstemperatur liegt im Bereich zwischen 70°C und 160°C, besonders bevorzugt zwischen 95 bis 100°C.

Eine bevorzugte Ausführungsform des ersten Reaktionsschritts besteht darin, dass die Reaktion in Gegenwart von sauren oder in Gegenwart eines Gemisches aus sauren und basischen Ionenaustauschern erfolgt. Geeignete Ionenaustauscher sind beispielsweise Ionenaustauscher auf Basis von chlormethylierten und mit Trimethylolamin aminierten Styren-Divinylbenzen-Copolymeren oder auf Basis von sulfonierten Styren-Divinylbenzen-Copolymeren.

Die im ersten Reaktionsschritt erhaltene alkoholische, bevorzugt methanolische Melaminharzvorkondensat-Lösung wird anschließend mindestens einem Verdampfungsschritt unterzogen und dabei aufkonzentriert.

Bevorzugt werden zwei Verdampfungsschritte durchgeführt. Beispielsweise wird das veretherte Melaminharzvorkondensat nach Einstellung eines pH-Wertes von weniger als 10 in einer ersten Verdampferstufe zur Abtrennung des Wasser-Methanol-Gemischs bei Temperaturen zwischen 60 und 100°C und bei einem Druck zwischen 0,2 und 1 bar bis zu einem Feststoffanteil an verethertem Melaminharzvorkondensat von 65 Massen-% bis 85 Massen-% eingeengt und in einer zweiten Verdampferstufe zur Erzielung eines Feststoffanteils an verethertem Melaminharzvorkondensat von 95 bis 99 Massen-% bei 60 bis 120°C und 0,1 bis 1 bar eingeengt.

Vor und / oder während des Aufkonzentrierens, das heisst vor der ersten und / oder vor der zweiten Verdampferstufe und/oder nach dem Aufkonzentrieren, das heißt vor dem zweiten Reaktionsschritt können dem Melaminharzvorkondensat C₄-C₁₈ - Alkohole, Diole vom Typ HO-R-OH und / oder vierwertige Alkohole auf der Basis von Erythrit zugesetzt werden. Dabei betragen die Molmassen der Diole bevorzugt 62 bis 20000.

Vor und / oder während des Aufkonzentrierens, das heißt vor der ersten und / oder vor der zweiten Verdampferstufe und/oder nach dem Aufkonzentrieren, das heißt vor dem zweiten Reaktionsschritt können dem Melaminharzvorkondensat in Alkoholen oder Wasser gelöste Säuren und/oder Säureanhydride zugegeben werden.

Das Verhältnis der Ethergruppen des Melaminvorkondensates / Hydroxygruppen der zugesetzten C₄-C₁₈ Alkohole und/oder Diole kann z.B. zwischen 1:0,5 und 1:0,1 liegen. Beispiele für geeignete C₄-C₁₈ Alkohole sind Butanol, Ethylhexylalkohol, Dodecylalkohol und Stearylalkohol.

Die zugesetzten Diole sind bevorzugt Diole, bei denen der Substituent R eine der folgenden Strukturen aufweist:

C₂-C₁₈-Alkylen,

-CH(CH₃)-CH₂-O-(C₂-C₁₂)-Alkylen-O-CH₂-CH(CH₃)-,

-CH(CH₃)-CH₂-O-(C₂-C₁₂)-Arylen-O-CH₂-CH(CH₃)-,

-(CH₂-CH₂-CH₂-CH₂-CH₂-CO-)ₓ-(CH₂-CHR)_{y}-

-[CH₂-CH₂-O-CH₂-CH₂]ₙ-,

-[CH₂-CH(CH₃)-O-CH₂-CH(CH₃)]ₙ-,

-[-O-CH₂-CH₂-CH₂-CH₂-]ₙ-,

-[(CH₂)₂₋₈-O-CO-(C₆-C₁₄)-Arylen-CO-O-(CH₂)₂₋₈-]ₙ-,

-[(CH₂)₂₋₈-O-CO-(C₂-C₁₂)-Alkylen-CO-O-(CH₂)₂₋₈-]ₙ-,

wobei n = 1 bis 200;
- Siloxangruppen enthaltende Sequenzen des Typs 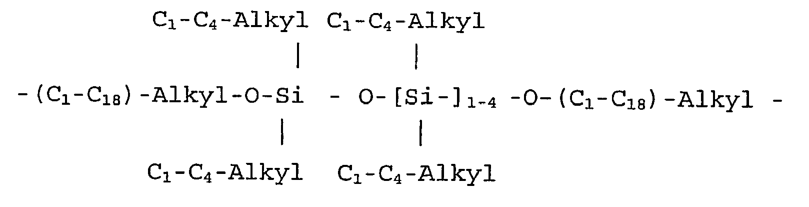
- Siloxangruppen enthaltende Polyestersequenzen des Typs

   -[(X)ᵣ-O-CO-(Y)ₛ-CO-O-(X)ᵣ]- ,

   bei denen

   X ={(CH₂)₂₋₈-O-CO-(C₆-C₁₄)-Arylen-CO-O- (CH₂)₂₋₈-}

   oder

   - {(CH₂)₂₋₈-O-CO-(C₂-C₁₂)-Alkylen-CO-O- (CH₂)₂₋₈-};

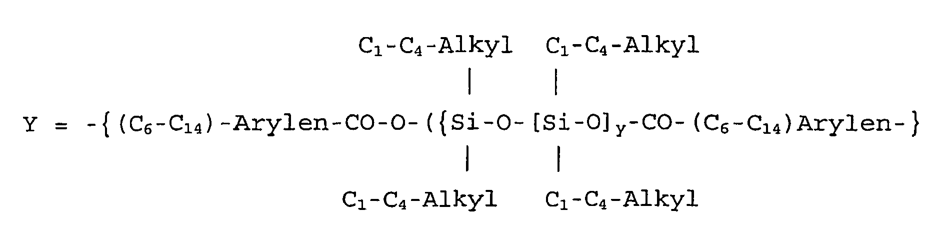

   oder 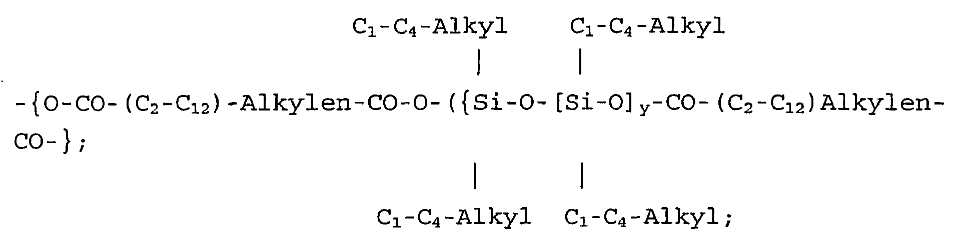 wobei r = 1 bis 70; s = 1 bis 70 und y = 3 bis 50 bedeuten;
- Siloxangruppen enthaltende Polyethersequenzen des Typs 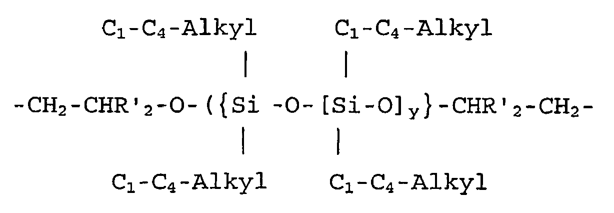 wobei R'₂ = H; C₁-C₄-Alkyl und y = 3 bis 50 bedeuten;

- Sequenzen auf Basis von Alkylenoxidaddukten des Melamins vom Typ
   2-Amino-4,6-di-(C₂-C₄)alkylenamino-1,3,5-triazin - Sequenzen
- Phenolethersequenzen auf Basis zweiwertiger Phenole und C₂₋C₈-Diolen vom Typ
   - (C₂-C₈)Alkylen-O-(C₆-C₁₈)-Arylen-O-(C₂-C₈)-Alkylen-Sequenzen; bedeuten.

Beispiele für Diole vom Typ HO-R₁-OH, wobei R₁ = C₂-C₁₈₋Alkylen bedeuten, sind Ethylenglykol, Butandiol, Oktandiol, Dodekandiol und Oktadekandiol.

Beispiele für Diole vom Typ HO-R₂-OH, wobei
R₂ = -[CH₂-CH₂-O-CH₂-CH₂]ₙ- und n = 1-200 ist, sind Polyethylenglykole mit Molmassen von 500 bis 5000.

Beispiele für Diole vom Typ HO-R₃-OH, wobei
R₃ = -[CH₂-CH(CH₃)-O-CH₂-CH(CH₃)]ₙ- und n = 1-200 ist, sind Polypropylenglykole mit Molmassen von 500 bis 5000.

Beispiele für Diole vom Typ HO-R₄-OH, wobei
R₄ = -[-O-CH₂-CH₂-CH₂-CH₂-]ₙ- und n = 1-200 ist, sind Polytetrahydrofurane mit Molmassen von 500 bis 5000.

Beispiele für Diole vom Typ HO-R₅-OH, wobei
R₅ = -[(CH₂)₂₋₈-O-CO-(C₆-C₁₄)-Arylen-CO-O-(CH₂)₂₋₈]ₙ- und n = 1-200 ist, sind Ester und Polyester auf Basis gesättigter Dicarbonsäuren, wie Terephthalsaure, Isophthalsäure oder Naphthalindicarbonsäure und Diolen wie Ethylenglykol, Butandiol, Neopentylglykol und/oder Hexandiol. Als Ester wird Bis(hydroxyethyl)terephthalat bevorzugt.

Beispiele für Diole vom Typ HO-R₆-OH, wobei
R₆ = -[(CH₂)₂₋₈-O-CO-(C₂-C₁₂)-Alkylen-CO-O-(CH₂)₂₋₈-]ₙund n = 1-200 ist, sind Polyester auf Basis gesättigter Dicarbonsäuren wie Adipinsäure und/oder Bernsteinsaure, ungesättigter Dicarbonsauren, wie Maleinsaure, Fumarsaure und/oder Itakonsäure und Diolen wie Ethylenglykol, Butandiol, Neopentylglykol und/oder Hexandiol.

Beispiele für Diole vom Typ HO-R₇-OH, wobei
R₇ = Siloxangruppen enthaltende Sequenzen des Typs 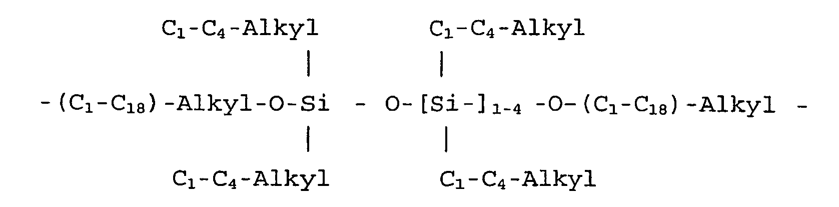 bedeuteten, sind 1,3-Bis(hydroxybutyl)tetramethyldisiloxan und 1,3- Bis(hydroxyoktyl)tetraethyldisiloxan.

Beispiele für Polyestersequenzen mit Siloxangruppen enthaltende Diole vom Typ HO-R₈-OH, wobei

R₈ = -[(X)ᵣ-O-CO-(Y)ₛ-CO-O-(X)ᵣ]- ,

bei denen

X ={(CH₂)₂₋₈-O-CO-(C₆-C₁₄)-Arylen-CO-O-(CH₂)₂₋₈-}

oder

-{(CH₂)₂₋₈-O-CO-(C₂-C₁₂)-Alkylen-CO-O-(CH₂)₂₋₈-};

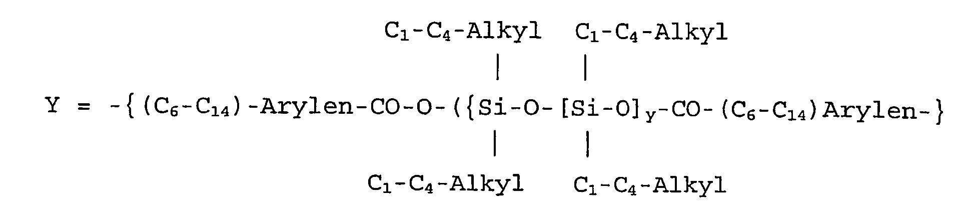

oder 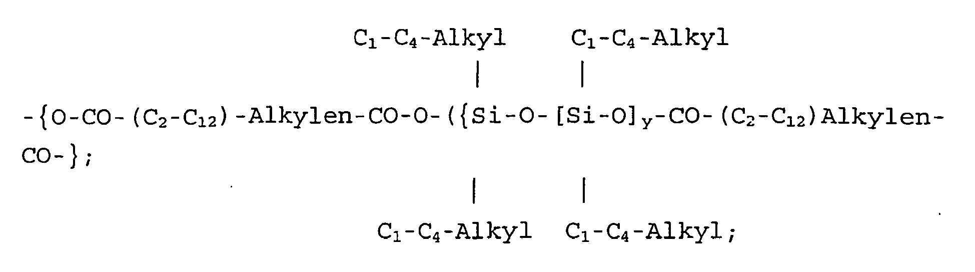 wobei r = 1 bis 70; s = 1 bis 70 und y = 3 bis 50 bedeuten, sind Hydroxylendgruppen enthaltende Polyester auf Basis aromatischer C₆-C₁₄-Arylen-dicarbonsäuren, wie Terephthalsäure oder Naphthalindicarbonsäure, aliphatische C₂-C₁₂₋Alkylendicarbonsäuren wie Adipinsäure, Maleinsäure oder Pimelinsäure. Diolen wie Ethylenglykol, Butandiol, Neopentylglykol oder Hexandiol und Siloxanen wie Hexamethyldisiloxan oder α,ω-Dihydroxypolydimethylsiloxan.

Beispiele für Siloxangruppen enthaltende Polyetherdiole HO-R₉-OH, bei denen R₉ Polyethersequenzen des Typs 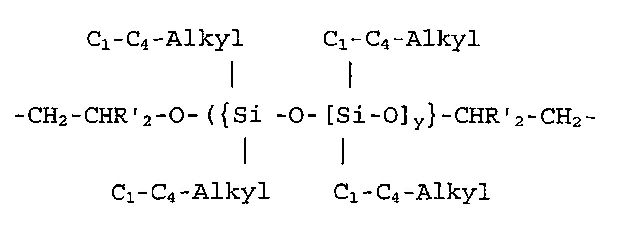 wobei R'₂ = H; C₁-C₄-Alkyl und y = 3 bis 50 bedeuten; sind Polyetherdiole auf Basis von Siloxanen wie Hexamethyldisiloxan oder α,ω-Dihydroxypolydimethylsiloxan und Alkylenoxiden, wie Ethylenoxid oder Propylenoxid.

Beispiele für Diole auf Basis von Alkylenoxidaddukten des Melamins vom Typ
2-Amino-4,6-bis(hydroxy-(C₂-C₄)-alkylenamino)-1,3,5-triazin sind Diole auf Basis Melamin und Ethylenoxid oder Propylenoxid.

Beispiele für Phenoletherdiole auf Basis zweiwertiger Phenole und C₂-C₈ Diolen vom Typ

Bis(hydroxy-(C₂-C₈) - Alkylen-O-) (C₆-C₁₈)-Arylen sind Ethylenoxidaddukte oder Propylenoxid-addukte an Diphenylolpropan.

Neben Diolen als mehrwertige Alkohole können beim Direktsyntheseverfahren ebenfalls dreiwertige Alkohole wie Glycerin oder vierwertige Alkohole auf der Basis von Erythrit oder deren Mischungen mit zweiwertigen Alkoholen eingesetzt werden.

Erfolgt der Zusatz von C₄-C₁₈-Alkoholen und/oder Diolen vom Typ HO-R-OH vor der ersten Verdampferstufe und/oder vor der zweiten Verdampferstufe, so werden zur Homogenisierung der Komponenten vor den Verdampferstufen Mischstrecken installiert.

In einem zweiten Reaktionsschritt wird das mit Alkoholen und/oder Diolen versetzte Melaminharzvorkondensat in einem Kneter umgesetzt. Bevorzugt handelt es sich dabei um einen kontinuierlichen Kneter. Die Reaktionszeit im Kneter beträgt etwa 2 bis 12 min, die Reaktionstemperatur beträgt etwa 180 bis 250°C. Im Kneter erfolgt die Entfernung nicht umgesetzter Reaktanden unter Entgasung, das veretherte Melaminharzkondensat wird anschließend bevorzugt ausgetragen und granuliert.

Dabei ist es möglich, in den kontinuierlichen Kneter zusätzlich bis zu 75 Massen-% Füllstoffe und/oder Verstärkungsfasern, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Massen-%, jeweils bezogen auf die veretherten Melaminharzkondensate, Stabilisatoren, UV-Absorber und/oder Hilfsstoffe zuzugeben.

Als kontinuierliche Kneter können im zweiten Reaktionsschritt Doppelschneckenextruder eingesetzt werden, die sowohl nach der Einzugszone als auch nach der Reaktionszone Entgasungszonen besitzen. Solche Doppelschneckenextruder können ein Verhältnis L/D = 32-48 mit gleichläufiger Schneckenanordnung aufweisen.

Grundsätzlich sind als Kneter auch andere, sich mindestens teilweise selbst reinigende, kontinuierlich arbeitende, für die Verarbeitung hochviskoser Medien geeignete Maschinen mit Vakuumentgasung verwendbar (z.B. Buss co Kneter, Einschneckenextruder, Extruder in Kaskadenanordnung, Ein- oder Zweiwellenknetmaschinen des Typs LIST ORP; CRP, Discotherm etc.).

Zur Abtrennung von Inhomogenitäten kann die Schmelze mit einer Zahnradpumpe in einen Schmelzefilter gefördert werden. Die Überführung der Schmelze in Granulatpartikel kann in Granulatoren oder in Pastillierungsanlagen durch Dosierung der Schmelze über eine Aufgabevorrichtung auf ein kontinuierliches Stahlband und Kühlung und Verfestigung der abgelegten Pastillen erfolgen.

Beispiele für geeignete Füllstoffe, die beim Direktsyntheseverfahren in den kontinuierlichen Kneter dosiert werden können, sind: Al₂O₃, Al(OH)₃, Bariumsulfat, Calciumcarbonat, Glaskugeln, Kieselerde, Glimmer, Quarzmehl, Schiefermehl, Mikrohohlkugeln, Russ, Talkum, Gesteinsmehl, Holzmehl, Cellulosepulver und/oder Schalen- und Kernmehle, wie Erdnussschalenmehl oder Olivenkernmehl. Bevorzugt werden als Füllstoffe Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/ oder synthetische Smectite.

Beispiele für geeignete Verstärkungsfasern, die beim Direktsyntheseverfahren in den kontinuierlichen Kneter dosiert werden können, sind anorganische Fasern, insbesondere Glasfasern und/oder Kohlenstofffasern, Naturfasern, insbesondere Cellulosefasern wie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Beispiele für reaktive Polymere vom Typ Ethylen-Copolymere, die beim Direktsyntheseverfahren in den kontinuierlichen Kneter dosiert werden können, sind teilverseifte EthylenVinylacetat-Copolymere, Ethylen-Butylacryl-Acrylsäure-Copolymere, Ethylen-Hydroxy-ethylacrylat-Copolymere oder Ethylen-Butylacrylat-Glycidylmethacrylat-Copolymere.

Beispiele für reaktive Polymere vom Typ Maleinsäureanhydrid-Copolymere, die beim Direktsyntheseverfahren in den kontinuierlichen Kneter dosiert werden können, sind C₂-C₂₀₋Olefin-Maleinsäureanhydrid-Copolymere oder Copolymere aus Maleinsäureanhydrid und C₈-C₂₀-Vinylaromaten.

Beispiele für die C₂-C₂₀-Olefin-Komponenten, die in den Maleinsäureanhydrid-Copolymeren enthalten sein können, sind Ethylen, Propylen, Buten-1, Isobuten, Diisobuten, Hexen-1, Octen-1, Hepten-1, Penten-1, 3-Methylbuten-1, 4-Methylpenten-1, Methylethyl-penten-1, Ethylpenten-1, Ethylhexen-1, Octadecen-1 und 5,6-Dimethylnorbornen.

Beispiele für die C₈-C₂₀-Vinylaromaten-Komponenten, die in den Maleinsäureanhydrid-Copolymeren enthaltenen sein können, sind Styren, α-Methylstyren, Dimethylstyren, Isopropenylstyren, p-Methylstyren und Vinylbiphenyl.

Beispiele für modifizierte Maleinsäureanhydrid-Copolymere, die beim Direktsyntheseverfahren in den kontinuierlichen Kneter dosiert werden können, sind partiell oder vollständig veresterte, amidierte bzw. imidierte Maleinsäureanhydrid-Copolymere.

Besonders geeignet sind modifizierte Copolymere aus Maleinsäureanhydrid und C₂-C₂₀-Olefinen bzw. C₈-C₂₀₋Vinylaromaten mit einem Molverhältnis von 1 : 1 bis 1 : 9 und Molmassen-Gewichtsmitteln von 5000 bis 500000, die mit Ammoniak, C₁-C₁₈-Monoalkylaminen, C₆-C₁₈-aromatischen Monoaminen, C₂-C₁₈-Monoaminoalkoholen, monoaminierten Poly(C₂₋C₄-alkylen)oxiden einer Molmasse von 400 bis 3000, und/oder monoveretherten Poly(C₂-C₄-alkylen)oxiden einer Molmasse von 100 bis 10000 umgesetzt worden sind, wobei das Molverhältnis der Anhydridgruppen am Copolymeren zu Ammoniak, Aminogruppen C₁-C₁₈-Monoalkylamine, C₆-C₁₈-aromatische Monoamine, C₂-C₁₈₋Monoaminoalkohole bzw. monoaminiertes Poly(C₂-C₄-alkylen)oxid und/oder Hydroxygruppen Poly(C₂-C₄-alkylen)oxid 1 : 1 bis 20 : 1 beträgt.

Beispiele für reaktive Polymere vom Typ Poly(meth)acrylate, die beim Direktsyntheseverfahren in den kontinuierlichen Kneter dosiert werden können, sind Copolymere auf Basis von funktionellen ungesättigten (Meth)acrylatmonomeren, wie Acrylsäure, Hydroxyethylacrylat, Glycidylacrylat, Methacrylsäure, Hydroxybutylmethacrylat oder Glycidylmethacrylat und nichtfunktionellen ungesättigten (Meth)acrylatmonomeren, wie Ethylacrylat, Butylacrylat, Ethylhexylacrylat, Methylmethacrylat Ethylacrylat und/oder Butylmethacrylat und/oder C₈-C₂₀-Vinylaromaten. Bevorzugt werden Copolymere auf Basis Methacrylsäure, Hdroxyethylacrylat, Methylmethacrylat und Styren.

Beispiele für reaktive Polymere vom Typ Polyamide. die beim Direktsyntheseverfahren in den kontinuierlichen Kneter dosiert werden können, sind Polyamid-6, Polyamid-6,6, Polyamid-11, Polyamid-12, Polyaminoamide aus Polycarbonsäuren und Polyalkylenaminen sowie die entsprechenden methoxylierten Polyamide.

Beispiele für reaktive Polymere vom Typ Polyester, die beim Direktsyntheseverfahren in den kontinuierlichen Kneter dosiert werden können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsauren, wie Maleinsäure, Fumarsäure und/oder Itakonsäure und Diolen wie Ethylenglykol, Butandiol. Neopentylglykol und/oder Hexandiol. Bevorzugt werden verzweigte Polyester auf Basis von Neopentylglykol, Trimethylolpropan, Isophthalsäure und Azelainsäure.

Beispiele für reaktive Polymere vorn Typ Polyurethane, die beim Direktsyntheseverfahren in den kontinuierlichen Kneter dosiert werden können, sind unvernetzte Polyurethane auf Basis von Toluylendiisocyanat, Diphenylmethandiisocyanat, Butandiisocyanat und/oder Hexandiisocynat als Diisocyanatkomponenten und Butandiol, Hexandiol und/oder Polyalkylenglykole als Diolkomponenten mit Molmassen von 200 bis 30000.

Beispiele für geeignete Stabilisatoren und UV-Absorber, die beim Direktsyntheseverfahren in den kontinuierlichen Kneter dosiert werden können, sind Piperidinderivate, Benzophenonderivate, Benzotriazolderivate, Triazinderivate und/oder Benzofuranonderivate.

Beispiele für geeignete Hilfsstoffe, die beim Direktsyntheseverfahren in den kontinuierlichen Kneter dosiert werden können, sind latente Härter wie Ammoniumsulfat und/oder Ammoniumchlorid und/oder Verarbeitungshilfsmittel wie Calciumstearat, Magnesiumstearat und/oder Wachse.

Der besondere Vorteil des erfindungsgemäßen Direktsyntheseverfahrens besteht darin, dass die Molmasse der veretherten Melaminharzkondensate durch den Zusatz von C₄-C₁₈₋Alkoholen und/oder Diolen vom Typ HO-R-OH gezielt geregelt werden kann. Ohne Zusatz von C₄-C₁₈-Alkoholen und/oder Diolen vom Typ HO-R-OH erfolgt die Molmassenvergrößerung in den veretherten Melaminharzkondensaten über die darin enthaltenen Azomethingruppen unkontrolliert. Die Reglerfunktion der zugesetzten C₄-C₁₈- Alkohole und/oder Diole vom Typ HO-R-OH besteht darin, dass deren Hydroxygruppen die in den veretherten Melaminharzkondensaten enthaltenen Azomethingruppen desaktivieren. Werden Diole zugesetzt, so erfolgt die Desaktivierung unter gleichzeitiger Verknüpfung von zwei Melaminharz-Clustern.

Die erfindungsgemäß hergestellten veretherten Melminharzkondensate haben mittlere Molmassen von 500 bis 50000.

Bevorzugt sind die erfindungsgemäß hergestellten veretherten Melaminharzkondensate Mischungen mit mittleren Molmassen von 500 bis 2500, besonders bevorzugt von 800 bis 1500 aus Tris(methoxymethylamino)triazin und dessen höhermolekularen Oligomeren.

Die nach dem erfindungsgemäßen Verfahren hergestellten veretherten Melaminharzkondensate sind bevorzugt zur Schmelzeverarbeitung, insbesondere als Schmelzkleber und zur Herstellung von Platten, Rohren, Profilen, Spritzgussteilen, Fasern, Beschichtungen und Schaumstoffen oder zur Verarbeitung aus Lösung oder Dispersion als Adhesiv, Imprägnierharz, Lackharz oder Laminierharz oder zur Herstellung von Schäumen, Mikrokapseln oder Fasern, geeignet.

Der besondere Vorteil der nach dem Direktsyntheseverfahren hergestellten veretherten Melaminharzkondensate mit mittleren Molmassen von 500 bis 50000 besteht darin, dass sie auf Grund der höheren Schmelzviskosität gegenüber üblichen Triazinderivatvorkondensaten wie Melamin-Formaldehyd-Vorkondensaten nach Schmelzeverarbeitungsverfahren wie Thermoplaste verarbeitet werden können und Härte und Flexibilität der daraus hergestellten Erzeugnisse in einem breiten Eigenschaftsbereich einstellbar sind.

Der Anteil an flüchtigen Spaltprodukten während der Aushärtung der nach dem Direktsyntheseverfahren hergestellten veretherten Melaminharzkondensate während der Ausformung der Schmelze zum Erzeugnis ist gegenüber üblichen Formmassen auf Basis von niedrigmolekularen Aminoplast-Vorkondensaten drastisch reduziert. Dadurch lassen sich aus den veretherten Melaminharzkondensaten bei kurzen Taktzeiten rissfreie Erzeugnisse herstellen.

Bevorzugte Einsatzgebiete der nach dem Direktsyntheseverfahren hergestellten veretherten Melaminharzkondensate sind Schmelzkleber sowie die Herstellung von Platten, Rohren, Profilen, Spritzgussteilen, Fasern und Schaumstoffen.

Die nach dem Direktsyntheseverfahren hergestellten veretherten Melaminharzkondensate, insofern sie keine Füllstoffe oder weitere reaktive Polymere enthalten, sind in polaren Lösungsmitteln vom Typ C₁-C₁₀-Alkohole, Dimethylformamid oder Dimethylsulfoxid in Konzentrationen bis 60 Massen-% löslich. Die Lösungen oder Dispersionen sind als Adhesiv, Imprägniermittel, Lackharz- oder Laminierharzrezeptur oder zur Herstellung von Schäumen, Mikrokapseln oder Fasern geeignet. Die Vorteile der Lösungen bzw. Dispersionen der nach dem Direktsyntheseverfahren hergestellten veretherten Melaminharzkondensate gegenüber üblichen Triazinharz-Vorkondensaten bestehen in der höheren Viskosität und den daraus resultierenden besseren Verlaufseigenschaften oder höheren Festigkeiten nicht ausgehärteter Zwischenprodukte bei der Faser- oder Schaumherstellung.

Mit Vorteil sind die Melaminharzkondensate frei von an die Triazinringe des Melaminharzkondensats gebundenen Hydroxymethylenaminogruppen und Triazinringe verknüpfenden -NH-CH₂-O-CH₂-NH- -Gruppen.

Die Aufgabe wird auch durch Melaminharzerzeugnisse gelöst, die unter Verwendung der nach dem Direktsyntheseverfahren hergestellten veretherten Melaminharzkondensate hergestellt werden.

Die Erfindung wird durch nachfolgende Beispiele erläutert.

### Beispiel 1

In einem Rührautoklaven wird durch Eintragen von 12,0 kg Melamin in 42,6 kg Methanol bei 95°C eine Melamindispersion hergestellt, und nach Einstellung eines pH-Wertes von 6 in den Rührautoklav als Formaldehydkomponente eine Mischung aus 10 kg Formaldehyd, 2,7 kg Methanol und 16,6 kg Wasser, die auf 90°C vortemperiert ist, unter Druck dosiert, und das Reaktionsgemisch bei einer Reaktionstemperatur von 95°C und einer Reaktionszeit von 5 min umgesetzt.

Nach Abkühlung auf 65°C wird durch Zugabe von n/10 Natronlauge ein pH-Wert von 9 eingestellt, und das im Wasser-Methanol-Gemisch gelöste veretherte Melaminharzvorkondensat wird nach Zugabe von 21,0 kg Butanol in einen ersten Vakuumverdampfer überführt, in dem die Lösung des veretherten Melaminharzvorkondensats bei 80°C zu einer hochkonzentrierten Melaminharzlösung, die einen Feststoffanteil von 75 Massen-% und einen Gehalt an Butanol von 10 Massen-% besitzt, eingeengt wird.

Nachfolgend wird die hochkonzentrierte Lösung des veretherten Melaminharzes in einen zweiten Vakuumverdampfer überführt und bei 90°C zu einer sirupösen Schmelze eingeengt, die einen Feststoffanteil von 95 Massen-% und einen Gehalt an Butanol von 5 Massen-% besitzt.

Die sirupöse Schmelze wird in den Einzugstrichter eines Laborextruders GL 27 D44 (Leistritz) mit Vakuumentgasung nach der Reaktionszone vor dem Produktaustrag, Temperaturprofil 220°C/220°C/220°C/240°C/240°C/240°C/240°C/240°C/240°C/190°C/150°C, Extruderdrehzahl 150 min⁻¹. dosiert, und nach einer Verweilzeit in der Reaktionszone von 3,2 min, werden flüchtige Anteile mit 100 mbar entgast und der austretende Strang in einem Granulator geschnitten.

Das veretherte Melaminharzkondensat besitzt ein Molmassen-Gewichtsmittel (GPC) von 800 und einen Anteil an Butoxygruppen von 4,1 Massen-%. An die Triazinringe des Melaminharzkondensats gebundene Hydroxymethylenaminogruppen und Triazinringe verknüpfende -NH-CH₂-O-CH₂-NH- -Gruppen sind im IR-Spektrum nicht nachweisbar.

### Beispiel 2

In einem Rührautoklav wird durch Eintragen von 12,0 kg Melamin in 42,6 kg Methanol bei 95°C eine Melamindispersion hergestellt, und nach Einstellung eines pH-Wertes von 6,1 in den Rührautoklav als Formaldehydkomponente eine Mischung aus 8,6 kg Formaldehyd und 8,6 kg Wasser, die auf 92°C vortemperiert ist, unter Druck dosiert, und das Reaktionsgemisch bei einer Reaktionstemperatur von 95°C und einer Reaktionszeit von 6 min umgesetzt. Nach Abkühlung auf 65°C wird durch Zugabe von n/10 Natronlauge ein pH-Wert von 9,2 eingestellt und das im Wasser-Methanol-Gemisch gelöste veretherte Melaminharzvorkondensat wird in einen ersten Vakuumverdampfer überführt, in dem die Lösung des veretherten Melaminharzvorkondensats bei 80°C zu einer hochkonzentrierten Melaminharzlösung, die einen Feststoffanteil von 78 Massen-% besitzt, eingeengt wird.

Nachfolgend wird die hochkonzentrierte Lösung des veretherten Melaminharzes in einer Mischstrecke mit 0,8 kg Simulsol BPLE (Oligoethylenglykolether von Bisphenol A) gemischt, in einen zweiten Vakuumverdampfer überführt und bei 90°C zu einer sirupösen Schmelze eingeengt, die einen Feststoffanteil von 98 Massen-% und einen Gehalt an Butanol von 2 Massen-% besitzt.

Die sirupöse Schmelze wird in den Einzugstrichter eines Laborextruders GL 27 D44 (Leistritz) mit Vakuumentgasungszonen nach der Einzugszone sowie nach der Reaktionszone vor dem Produktaustrag, Temperaturprofil 220°C/220°C/220°C/240°C/240°C/240°C/240°C/240°C/240°C/190°C/150°C, Extruderdrehzahl 150 min⁻¹, dosiert, das Reaktionsgemisch mit 150 mbar entgast, und nach einer Verweilzeit in der Reaktionszone von 3,2 min werden die flüchtigen Anteile mit 100 mbar entgast und der austretende Strang in einem Granulator geschnitten.

Das veretherte Melaminharzkondensat besitzt ein Molmassen-Gewichtsmittel (GPC) von 10000. An die Triazinringe des Melaminharzkondensats gebundene Hydroxymethylenaminogruppen und Triazinringe verknüpfende -NH-CH₂-O-CH₂-NH- -Gruppen sind im IR-Spektrum nicht nachweisbar.

### Beispiel 3

In einem Rührautoklaven wird durch Eintragen von 12,0 kg Melamin in 42,6 kg Methanol bei 95°C eine Melamindispersion hergestellt, und nach Einstellung eines pH-Wertes von 5,9 in den Rührautoklav als Formaldehydkomponente eine Mischung aus 8,6 kg Formaldehyd, 3,5 kg Methanol und 9,9 kg Wasser, die auf 90°C vortemperiert ist, unter Druck dosiert, und das Reaktionsgemisch bei einer Reaktionstemperatur von 95°C und einer Reaktionszeit von 10 min umgesetzt.

Nach Abkühlung auf 65°C wird durch Zugabe von n/10 Natronlauge ein pH-Wert von 9 eingestellt, und das im Wasser-Methanol-Gemisch gelöste veretherte Melaminharzvorkondensat wird nach Zugabe von 21,0 kg Butanol in einen ersten Vakuumverdampfer überführt, in dem die Lösung des veretherten Melaminharzvorkondensats bei 82°C zu einer hochkonzentrierten Melaminharzlösung, die einen Feststoffanteil von 76 Massen-% und einen Gehalt an Butanol von 8 Massen-% besitzt, eingeengt wird.

Nachfolgend wird die hoch konzentrierte Lösung des veretherten Melaminharzes in einen zweiten Vakuumverdampfer überführt und bei 90°C zu einer sirupösen Schmelze eingeengt, die einen Feststoffanteil von 96 Massen-% und einen Gehalt an Butanol von 4,5 Massen-% besitzt.

Die sirupöse Schmelze wird in einer Mischstrecke mit 5,0 kg Polyethylenglykol (Molmasse 800) gemischt in den Einzugstrichter eines Laborextruders GL 27 D44 mit Vakuumentgasungszonen nach der Einzugszone sowie nach der Reaktionszone vor dem Produktaustrag, Temperaturprofil 220°C/220°C/220°C/240°C/240°C/240°C/240°C/240°C/240°C/190°C/150°C, Extruderdrehzahl 150 min⁻¹, dosiert, das Reaktionsgemisch mit 150 mbar entgast, und nach einer Verweilzeit in der Reaktionszone von 3,1 min werden die flüchtigen Anteile mit 100 mbar entgast und der austretende Strang in einem Granulator geschnitten.

Das veretherte Melaminharzkondensat besitzt ein Molmassen-Gewichtsmittel (GPC) von 20000 und einen Anteil an Butoxygruppen von weniger als 0,5 Massen-%. An die Triazinringe des Melaminharzkondensats gebundene Hydroxymethylenaminogruppen und Triazinringe verknüpfende -NH-CH₂-O-CH₂-NH- -Gruppen sind im IR-Spektrum nicht nachweisbar.

### Beispiel 4

In einem 10 1 Rührautoklav wird durch Eintragen von 1,0 kg Melamin in 3,6 kg Methanol bei 98°C eine Melamindispersion hergestellt, und nach Einstellung eines pH-Wertes von 6 in den Rührautoklav als Formaldehydkomponente 0,84 kg p-Formaldehyd dosiert, und das Reaktionsgemisch bei einer Reaktionstemperatur von 95°C bis zum Erreichen einer klaren Lösung bei dieser Temperatur weiter gerührt.

Nach Abkühlung auf 65°C wird durch Zugabe von n/10 Natronlauge ein pH-Wert von 9 eingestellt, und das gelöste veretherte Melaminharzvorkondensat wird nach Zugabe von 2,0 kg Butanol in einen ersten Vakuumverdampfer überführt, in dem die Lösung des veretherten Melaminharzvorkondensats bei 80°C zu einer hochkonzentrierten Melaminharzlösung, die einen Feststoffanteil von 79 Massen-% und einen Gehalt an Butanol von 7 Massen-% besitzt, eingeengt wird.

Nachfolgend wird die hochkonzentrierte Lösung des veretherten Melaminharzes in einen zweiten Vakuumverdampfer überführt und bei 90°C zu einer sirupösen Schmelze eingeengt, die einen Feststoffanteil von 96 Massen-% und einen Gehalt an Butanol von 3,4 Massen-% besitzt.

Die sirupöse Schmelze wird in den Einzugstrichter eines Laborextruders GL 27 D44 (Leistritz) mit Vakuumentgasung nach der Reaktionszone vor dem Produktaustrag, Temperaturprofil 220°C/220°C/220°C/240°C/240°C/240°C/240°C/240°C/240°C/190°C/150°C, Extruderdrehzahl 150 min⁻¹, dosiert. und nach einer Verweilzeit in der Reaktionszone von 3,2 min werden flüchtige Anteile mit 100 mbar entgast und der austretende Strang in einem Granulator geschnitten.

Das veretherte Melaminharzkondensat besitzt ein Molmassen-Gewichtsmittel (GPC) von 4200 und einen Anteil an Butoxygruppen von 3,8 Massen-%. An die Triazinringe des Melaminharzkondensats gebundene Hydroxymethylenaminogruppen und Triazinringe verknüpfende -NH-CH₂-O-CH₂-NH- Gruppen können im IR-Spektrum nicht nachgewiesen werden.

### Beispiel 5

In einem 100 1 Rührautoklav wird durch Eintragen von 12,0 kg Melamin in 42,6 kg Methanol bei 99°C eine Melamindispersion hergestellt, und nach Einstellung eines pH-Wertes von 6,1 in den Rührautoklav als Formaldehydkomponente eine Mischung aus 8,6 kg Formaldehyd und 8,6 kg Wasser, die auf 92°C vortemperiert ist; unter Druck dosiert, und das Reaktionsgemisch bei einer Reaktionstemperatur von 90°C und einer Reaktionszeit von 15 min umgesetzt.

Nach Abkühlung auf 65°C wird durch Zugabe von n/10 Natronlauge ein pH-Wert von 9,0 eingestellt und das im Wasser-Methanol-Gemisch gelöste veretherte Melaminharzvorkondensat wird nach Zugabe von 10 kg Butanol in einen ersten Vakuumverdampfer überführt, in dem die Lösung des veretherten Melaminharzvorkondensats bei 80°C zu einer hochkonzentrierten Melaminharzlösung, die einen Feststoffanteil von 80 Massen-% und einen Gehalt an Butanol von 3,4 Massen-% besitzt, eingeengt wird.

Nachfolgend wird die hochkonzentrierte Lösung des veretherten Melaminharzes in einer Mischstrecke mit 2,0 kg Bis(hydroxyethyl)terephthalat gemischt, in einen zweiten Vakuumverdampfer überführt und bei 90°C zu einer sirupösen Schmelze eingeengt, die einen Feststoffanteil von 98,5 Massen-% und einen Gehalt an Butanol von 1.5 Massen-% besitzt.

Die sirupöse Schmelze wird in den Einzugstrichter eines Laborextruders GL 27 D44 (Leistritz) mit Vakuumentgasungszonen nach der Einzugszone und nach der Reaktionszone vor der Seitenstromdosiereinrichtung, Temperaturprofil 220°C/220°C/220°C/240°C/240°C/240°C/240°C/240°C/240°C/190°C/150°C, Extruderdrehzahl von 150 min⁻¹, dosiert, das Reaktionsgemisch mit 150 mbar entgast, und nach einer Verweilzeit in der Reaktionszone von 3,2 min werden die flüchtigen Anteile mit 100 mbar entgas, über die Seitenstromdosiereinrichtung 4 Massen-% Na-Montmorillonit (Südchemie AG) sowie 6 Massen-%, jeweils bezogen auf eingesetztes Melamin, Polyamid D1466 (Ems-Chemie) in die Schmelze dosiert, homogenisiert und der austretende Strang in einem Granulator geschnitten.

### Beispiel 6

Der modifizierte gefüllte Melaminharzether nach Beispiel 5 wird auf einen mittleren Partikeldurchmesser von 0,07 mm fein vermahlen und zur Herstellung von Prepregs durch Bepulverung von Cellulosevliesen (120 g/m² Lenzing AG, Österreich) und nachfolgender Aufschmelzung des Pulvers im Infrarotstrahlerfeld bei ca. 160°C eingesetzt. Der Harzauftrag auf die hergestellten Cellulosevliesprepregs beträgt ca. 45 Massen-%.

Die Prepregs werden auf eine Größe von 30x20 cm zugeschnitten. Zur Herstellung eines Formteils mit gebogenen Kanten im Sinne eines U-Profils werden drei Prepregs und ein unbehandeltes Cellulosevlies als Oberseite übereinander in eine auf 160°C vorgeheizte Pressform (30x20cm) gelegt und die Presse langsam zugefahren, wobei sich die Prepregs auf Grund des noch nicht ausgehärteten Harzes leicht verformen lassen. Unter einem Druck von 150 bar wird die Temperatur auf 185°C erhöht und 12 min gepresst. Das fertige Werkstück wird entnommen, langsam abgekühlt und der durch austretendes Harz an der Tauchkante des Presswerkzeuges entstandene Grat abgeschliffen.

Aus dem Werkstück herausgefräste Probekörper besitzen im Biegeversuch ein E-Modul von 5.8 GPa, eine Dehnung bei Maximalkraft von 3,1% und eine Schlagzähigkeit von 11,8 kJ/m².

Auch wenn in den Beispielen die erste Verfahrensstufe in diskontinuierlicher Weise erfolgte, so kann das erfindungsgemäße Verfahren auch in einer kontinuierlichen Anlage mit einem entsprechend kontinuierlich arbeitenden Reaktor betrieben werden.

Als Verdampfer können Fallfilmverdampfer, Rotationsverdampfer oder auch andere Verdampferbauarten eingesetzt werden.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Direktsyntheseverfahren, der Verwendung von Melaminharzerzeugnissen und den Melaminharzerzeugnissen auch bei grundsätzlich anders gearteten Ausführungen Gebrauch machen.

## Patentansprüche

1. Direktsyntheseverfahren zur Herstellung von veretherten Melaminharzkondensaten mit mittleren Molmassen von 500 bis 50000,
**dadurch gekennzeichnet, dass**
a) im ersten Reaktionsschritt ein verethertes Melaminharzvorkondensat in alkoholischer Lösung hergestellt wird,
b) das veretherte Melaminharzvorkondensat in alkoholischer Lösung in mindestens einem Verdampfungsschritt aufkonzentriert wird, wobei dem Melaminharzvorkondensat vor, während und/oder nach dem Aufkonzentrieren C₄ -C₁₈ -Alkohole, Diole vom Typ HO-R-OH und / oder vierwertige Alkohole auf der Basis von Erythrit zugesetzt werden,
c) in einem zweiten Reaktionsschritt das aufkonzentrierte Melaminharzvorkondensat mit einem Mischer, insbesondere einem Kneter umgesetzt wird.

2. Direktsyntheseverfahren nach Anspruch 1, **dadurch gekennzeichnet, dass** das veretherte Melaminharzkondensat nach dem zweiten Reaktionsschritt ausgetragen und granuliert wird.

3. Direktsyntheseverfahren nach Anspruch 1 oder 2, **dadurch gekennzeichnet, dass** der Alkohol im ersten Reaktionsschritt Methanol ist.

4. Direktsyntheseverfahren nach mindestens einem der vorhergehenden Ansprüche, **dadurch gekennzeichnet, dass** im ersten Reaktionsschritt die Methylolierung des Melamins mit einer anschließender Veretherung stattfindet.

5. Direktsyntheseverfahren nach mindestens einem der vorhergehenden Ansprüche, **dadurch gekennzeichnet, dass** im ersten Verfahrenschritt Formaldehyd als Formalinlösung in variabler Konzentration und / oder Paraformaldehyd verwendet wird.

6. Direktsyntheseverfahren nach Anspruch 4, **dadurch gekennzeichnet, dass** die Methylolierung bei einem pH-Wert zwischen 7 und 9 und die Veretherung bei einem pH-Wert zwischen 5,5 und 6,5 erfolgt.

7. Direktsyntheseverfahren nach mindestens einem der Ansprüche 1 bis 4, **dadurch gekennzeichnet dass** im ersten Reaktionsschritt die Methylolierung und die Veretherung gleichzeitig erfolgen.

8. Direktsyntheseverfahren nach Anspruch 7, **dadurch gekennzeichnet, dass** der erste Reaktionsschritt bei einem pH-Wert zwischen 5,5 und 6,5 erfolgt.

9. Direktsyntheseverfahren nach mindestens einem der vorhergehenden Ansprüche, **dadurch gekennzeichnet, dass** der erste Reaktionsschritt in Gegenwart von sauren oder einer Mischung von sauren und basischen Ionenaustauschern erfolgt.

10. Direktsyntheseverfahren nach mindestens einem der vorhergehenden Ansprüche, **dadurch gekennzeichnet, dass** im ersten Reaktionsschritt eine Reaktionstemperatur von 70 bis 160°C, insbesondere zwischen 95 und 100 °C eingestellt wird.

11. Direktsyntheseverfahren nach mindestens einem der vorhergehenden Ansprüche, **dadurch gekennzeichnet, dass** der erste Reaktionsschritt mit einem Molverhältnis Melamin/Formaldehyd zwischen 1 : 2,0 und 1 : 4,0 durchgeführt wird.

12. Direktsyntheseverfahren nach mindestens einem der vorhergehenden Ansprüche, **dadurch gekennzeichnet, dass** das nach der Verdampfung erhaltene aufkonzentrierte Melaminharzvorkondensat eine Konzentration von 95 bis 99 Gew-% aufweist.

13. Direktsyntheseverfahren nach mindestens einem der vorhergehenden Ansprüche, **dadurch gekennzeichnet, dass** die Verdampfung der niedermolekularen Komponenten zweistufig erfolgt.

14. Direktsyntheseverfahren nach mindestens einem der vorhergehenden Ansprüche, **dadurch gekennzeichnet, dass** mindestens ein Diol vom Typ HO-R-OH mit Molmassen von 62 bis 20000 oder eine Mischung von mindestens zwei Diolen vom Typ HO-R-OH mit Molmassen von 62 bis 20000 eingesetzt werden, wobei der Substituent R eine der folgendem Strukturen aufweisen kann
C₂-C₁₈-Alkylen,
-CH(CH₃)-CH₂-O-(C₂-C₁₂)-Alkylen-O-CH₂-CH(CH₃)-,
-CH(CH₃)-CH₂-O-(C₂-C₁₂)-Arylen-O-CH₂-CH(CH₃)-,
-(CH₂-CH₂-CH₂-CH₂-CH₂-CO-)ₓ-(CH₂-CHR)_{y}-
-[CH₂-CH₂-O-CH₂-CH₂]ₙ -,
-[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-(C₆-C₁₄)-Arylen-CO-O-(CH₂)₂₋₈-]ₙ -,
-[(CH₂)₂₋₈-O-CO-(C₂-C₁₂)-Alkylen-CO-O-(CH₂)₂₋₈-]ₙ -,
wobei n = 1 bis 200; x= 5 bis 15;
- Siloxangruppen enthaltende Sequenzen des Typs 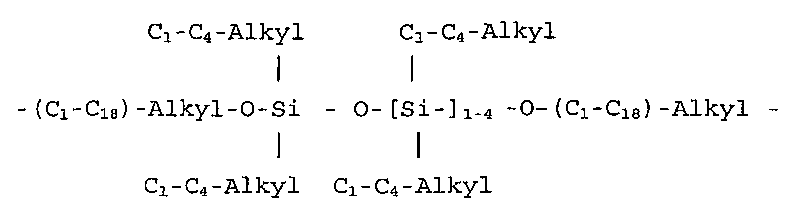
- Siloxangruppen enthaltende Polyestersequenzen des Typs
-[(X)ᵣ-O-CO-(Y)ₛ-CO-O-(X)ᵣ]- ,
bei denen
X ={(CH₂)₂₋₈-O-CO-(C₆-C₁₄)-Arylen-CO-O-(CH₂)₂₋₈-}
oder
-{(CH₂)₂₋₈-O-CO-(C₂-C₁₂)-Alkylen-CO-O-(CH₂)₂₋₈-}; 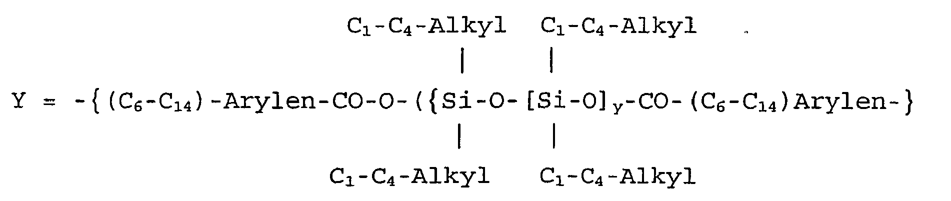
oder 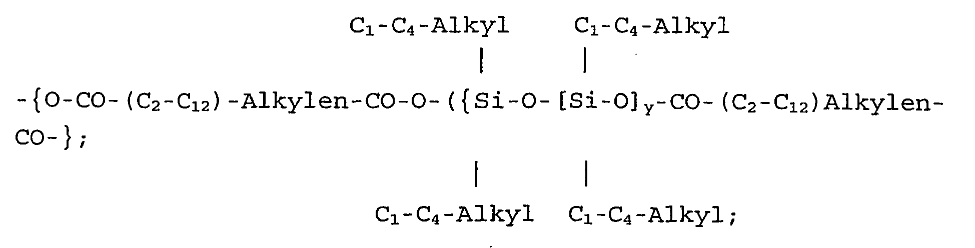 wobei r = 1 bis 70; s = 1 bis 70 und y = 3 bis 50 bedeuten;
- Siloxangruppen enthaltende Polyethersequenzen des Typs 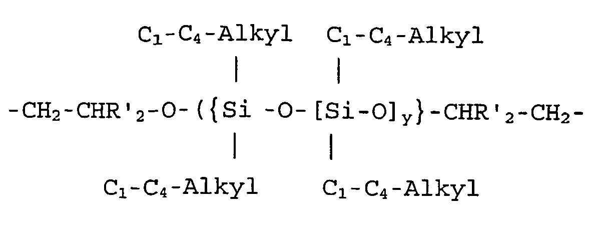
wobei R'₂ = H; C₁-C₄-Alkyl und y = 3 bis 50 bedeuten;
- Sequenzen auf Basis von Alkylenoxidaddukten des Melamins vom Typ 2-Amino-4,6-di-(C₂-C₄)alkylenamino-1,3,5-triazin - Sequenzen
- Phenolethersequenzen auf Basis zweiwertiger Phenole und C₂₋C₈-Diolen vom Typ
-(C₂-C₈)Alkylen-O-(C₆-C₁₈)-Arylen-O-(C₂-C₈)-Alkylen-Sequenzen
bedeutet.

15. Direktsyntheseverfahren nach mindestens einem der vorhergehenden Ansprüche, **dadurch gekennzeichnet, dass** die veretherten Melaminharzkondensate Mischungen mit mittleren Molmassen von 500 bis 2500 aus Tris(methoxymethylamino)triazin und dessen höhermolekularen Oligomeren sind.

16. Direktsyntheseverfahren nach mindestens einem der vorhergehenden Ansprüche, **dadurch gekennzeichnet, dass** vor und / oder während des Aufkonzentrierens, das heisst vor der ersten und / oder vor der zweiten Verdampferstufe und/oder nach dem Aufkonzentrieren, das heisst vor dem zweiten Reaktionssschritt dem Melaminharzvorkondensat in Alkoholen oder Wasser gelöste Säuren und/oder Säureanhydride zugegeben werden.

17. Direktsyntheseverfahren nach mindestens einem der vorhergehenden Ansprüche, **dadurch gekennzeichnet, dass** der Kneter als ein sich mindestens teilweise selbst reinigender, kontinuierlich arbeitender Extruder mit Vakuumentgasung ausgebildet ist.

18. Direktsyntheseverfahren nach mindestens einem der vorhergehenden Ansprüche, **dadurch gekennzeichnet, dass** als Kneter ein Doppelschneckenextruder mit Entgasungszonen verwendet wird.

19. Direktsyntheseverfahren nach mindestens einem der vorhergehenden Ansprüche, **dadurch gekennzeichnet, dass** im kontinuierlichen Kneter zusätzlich bis zu 75 Massen-% Füllstoffe und/oder Verstärkungsfasern, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Massen-%, jeweils bezogen auf die veretherten Melaminharzkondensate, Stabilisatoren, UV-Absorber und/oder Hilfsstoffe eingearbeitet werden.

20. Direktsyntheseverfahren nach mindestens einem der vorhergehenden Ansprüche, **dadurch gekennzeichnet, dass** der erste Reaktionsschritt in einem Rührkessel oder einem kontinuierlichen Reaktor ausgeführt wird.

21. Direktsyntehesverfahren nach mindestens einem der vorhergehenden Ansprüche, **dadurch gekennzeichnet, dass** das Verfahren kontinuierlich oder diskontinuierlich durch geführt wird.

22. Direktsyntheseverfahren nach mindestens einem der vorhergehenden Ansprüche, **dadurch gekennzeichnet, dass** die Melaminharzkondensate frei von an die Triazinringe des Melaminharzkondensats gebundenen Hydroxymethylenaminogruppen und Triazinringe verknüpfenden -NH-CH₂-O-CH₂-NH- -Gruppen sind,

23. Verwendung von veretherten Melaminharzkondensaten, hergestellt nach einem Direktsyntheseverfahren gemäß mindestens einem der Ansprüche 1 bis 22 zur Schmelzeverarbeitung, insbesondere als Schmelzkleber und zur Herstellung von Platten, Rohren, Profilen, Spritzgussteilen, Fasern, Beschichtungen und Schaumstoffen, oder zur Verarbeitung aus Lösung oder Dispersion als Adhesiv, Imprägnierharz, Lackharz oder Laminierharz oder zur Herstellung von Schäumen, Mikrokapseln oder Fasern.

24. Melaminharzerzeugnisse, hergestellt durch ein mit einem Direktsyntheseverfahren nach mindestens einem der Ansprüche 1 bis 22 veretherten Melaminharzkondensat.

## Claims

1. Direct synthesis process for preparing etherified melamine resin condensates with average molecular weights of from 500 to 50 000,
**characterized in that**
a) in the first step of the reaction, an etherified melamine resin precondensate is prepared in alcoholic solution,
b) in at least one vaporization step, the concentration of the etherified melamine resin precondensate in alcoholic solution is increased, C₄-C₁₈ alcohols, diols of the type represented by HO-R-OH and/or tetrahydric alcohols based on erythritol being added to the melamine resin precondensate prior to, during and/or after the concentration-increase process,
c) in a second step of the reaction, the increased-concentration melamine resin precondensate is reacted, using a mixer, in particular a kneader.

2. Direct synthesis process according to Claim 1, **characterized in that**, after the second step of the reaction, the etherified melamine resin condensate is discharged and pelletized.

3. Direct synthesis process according to Claim 1 or 2, **characterized in that** the alcohol in the first step of the reaction is methanol.

4. Direct synthesis process according to at least one of the preceding claims, **characterized in that**, in the first step of the reaction, the methylolation of the melamine takes place with subsequent etherification.

5. Direct synthesis process according to at least one of the preceding claims, **characterized in that**, in the first step of the process, formaldehyde is used in the form of formalin solution at variable concentration and/or paraformaldehyde.

6. Direct synthesis process according to Claim 4, **characterized in that** the methylolation takes place at a pH of from 7 to 9 and the etherification takes place at a pH of from 5.5 to 6.5.

7. Direct synthesis process according to at least one of Claims 1 to 4, **characterized in that**, in the first step of the reaction, the methylolation and the etherification take place simultaneously.

8. Direct synthesis process according to Claim 7, **characterized in that** the first step of the reaction takes place at a pH of from 5.5 to 6.5.

9. Direct synthesis process according to at least one of the preceding claims, **characterized in that** the first step of the reaction takes place in the presence of acidic, or of a mixture of acidic and basic, ion exchangers.

10. Direct synthesis process according to at least one of the preceding claims, **characterized in that**, in the first step of the reaction, a reaction temperature of from 70 to 160°C, in particular from 95 to 100°C, is established.

11. Direct synthesis process according to at least one of the preceding claims, **characterized in that** the first step of the reaction is carried out using a melamine/formaldehyde molar ratio of from 1 : 2.0 to 1 : 4.0.

12. Direct synthesis process according to at least one of the preceding claims, **characterized in that** the increased-concentration melamine resin precondensate obtained after the vaporization process has a concentration of from 95 to 99% by weight.

13. Direct synthesis process according to at least one of the preceding claims, **characterized in that** the vaporization of the low-molecular-weight components takes place in two stages.

14. Direct synthesis process according to at least one of the preceding claims, **characterized in that** use is made of at least one diol represented by the type HO-R-OH with molecular weight of from 62 to 20 000 or of a mixture of at least two diols represented by the type HO-R-OH with molecular weights of from 62 to 20 000, where the substituent R may have one of the following structures
C₂-C₁₈-alkylene,
-CH(CH₃)-CH₂-O-(C₂-C₁₂)-alkylene-O-CH₂-CH(CH₃)-,
-CH(CH₃)-CH₂-O-(C₂-C₁₂)-arylene-O-CH₂-CH(CH₃)-,
-(CH₂-CH₂-CH₂-CH₂-CH₂-CO-)ₓ-(CH₂-CHR)_{y}-
-[CH₂-CH₂-O-CH₂-CH₂]ₙ-,
-[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-(C₆-C₁₄)-arylene-CO-O-(CH₂)₂₋₈-]ₙ-,
-[(CH₂)₂₋₈-O-CO-(C₂-C₁₂)-alkylene-CO-O-(CH₂)₂₋₈-]ₙ-,
where n = 1 - 200; x = 5 - 15;
sequences which contain siloxane groups and are represented by the type 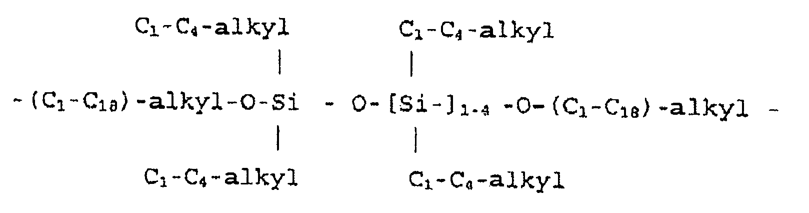 polyester sequences which contain siloxane groups and are represented by the type
-[(X)ᵣ-O-CO-(Y)ₛ-CO-O-(X)ᵣ]-,
where
X = {(CH₂)₂₋₈-O-CO-(C₆-C₁₄)-arylene-CO-O-(CH₂)₂₋₈-}
or
-{(CH₂)₂₋₈-O-CO-(C₂-C₁₂)-alkylene-CO-O-(CH₂)₂₋₈-}; 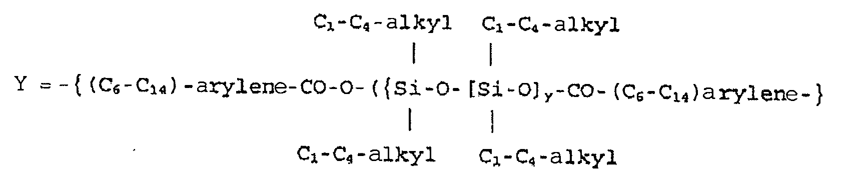
or 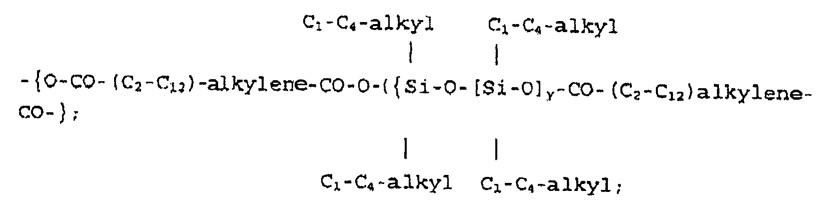 where r = 1 - 70; s = 1 - 70 and y = 3 - 50;
polyether sequences which contain siloxane groups and are represented by the type 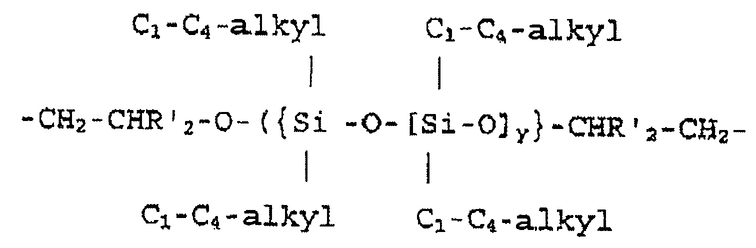 where R'₂ = H; C₁-C₄-alkyl and y = 3 - 50;
sequences based on alkylene oxide adducts of melamine and represented by the type of
2-amino-4,6-di-(C₂-C₄)alkyleneamino-1,3,5-triazine sequences
phenol ether sequences based on dihydric phenols and on C₂-C₈ diols and represented by the type of
-(C₂-C₈) alkylene-O-(C₆-C₁₈)-arylene-O-(C₂-C₈)- alkylene sequences.

15. Direct synthesis process according to at least one of the preceding claims, **characterized in that** the etherified melamine resin condensates are mixtures with average molecular weights of from 500 to 2500 composed of tris(methoxymethylamino)triazine and its higher-molecular-weight oligomers.

16. Direct synthesis process according to at least one of the preceding claims, **characterized in that**, prior to and/or during the concentration-increase process, i.e. prior to the first and/or prior to the second vaporizing stage and/or after the concentration-increase process, i.e. prior to the second step of the reaction, anhydrides and/or acids dissolved in alcohols or in water are added to the melamine resin precondensate.

17. Direct synthesis process according to at least one of the preceding claims, **characterized in that** the kneader is a continuously operating, at least to some extent self-cleaning, extruder with vacuum venting.

18. Direct synthesis process according to at least one of the preceding claims, **characterized in that** the kneader used comprises a twin-screw extruder with vent zones.

19. Direct synthesis process according to at least one of the preceding claims, **characterized in that**, in the continuous kneader, up to 75% by weight of fillers and/or reinforcing fibres, other reactive polymers of the type represented by ethylene copolymers, maleic anhydride copolymers, modified maleic anhydride copolymers, poly(meth)acrylates, polyamides, polyesters and/or polyurethanes are also incorporated, as are up to 2% by weight of stabilizers, UV absorbers and/or auxiliaries, each weight being based on the etherified melamine resin condensates.

20. Direct synthesis process according to at least one of the preceding claims, **characterized in that** the first step of the reaction is executed in a stirred tank or in a continuous reactor.

21. Direct synthesis process according to at least one of the preceding claims, **characterized in that** the process is carried out either continuously or batchwise.

22. Direct synthesis process according to at least one of the preceding claims, **characterized in that** the melamine resin condensates are free from hydroxymethyleneamino groups bonded to the triazine rings of the melamine resin condensate and from -NH-CH₂-O-CH₂-NH- groups linking triazine rings.

23. Use of etherified melamine resin condensates prepared by a direct synthesis process according to at least one of Claims 1 to 22 for processing in the melt, in particular in the form of hot-melt adhesives and for producing sheets, pipes, profiles, injection mouldings, fibres, coatings and foams, or for processing from solution or dispersion in the form of an adhesive, impregnating resin, surface-coating resin or laminating resin or for producing foams, microcapsules or fibres.

24. Melamine resin products, produced via a melamine resin condensate etherified using a direct synthesis process according to at least one of Claims 1 to 22.

## Revendications

1. Procédé de synthèse directe en vue de la fabrication de condensats de résines de mélamine éthérées ayant des masses molaires moyennes de 500 à 50 000, **caractérisé en ce que**
a) dans la première étape de réaction, on produit un pré-condensat de résine de mélamine éthérée en solution alcoolique,
b) on concentre le pré-condensat de résine de mélamine éthérée en solution alcoolique dans au moins une étape d'évaporation, étant donné que l'on ajoute au pré-condensat de résine de mélamine éthérée avant, pendant et/ou après l'opération de concentration, des alcools C₄₋C₁₈, des diols du type HO-R-OH et/ou des alcools tétravalents à base d'érythritol,
c) on mélange, dans une deuxième étape de réaction, le pré-condensat de résine de mélamine éthérée concentré à l'aide d'un malaxeur, en particulier d'un pétrisseur.

2. Procédé de synthèse directe selon la revendication 1, **caractérisé en ce que** le condensat de résine de mélamine éthérée est évacué après la deuxième étape de réaction et est mis sous forme de granulés.

3. Procédé de synthèse directe selon la revendication 1 ou 2, **caractérisé en ce que** l'alcool dans la première étape de réaction est le méthanol.

4. Procédé de synthèse directe selon l'une quelconque des revendications précédentes, **caractérisé en ce qu'**après la première étape de réaction, l'opération de méthylolation de la mélamine a lieu avec une éthérification subséquente.

5. Procédé de synthèse directe selon l'une quelconque des revendications précédentes, **caractérisé en ce que**, dans la première étape de procédé, l'on utilise le formaldéhyde en tant que solution de formaline en concentration variable et/ou le paraformaldéhyde.

6. Procédé de synthèse directe selon la revendication 4, **caractérisé en ce que** la méthylolation a lieu à une valeur de pH comprise entre 7 et 9, et **en ce que** l'éthérification a lieu à une valeur de pH comprise entre 5,5 et 6,5.

7. Procédé de synthèse directe selon l'une quelconque des revendications 1 à 4, **caractérisé en ce que**, dans la première étape de réaction, la méthylolation et l'éthérification se produisent simultanément.

8. Procédé de synthèse directe selon la revendication 7, **caractérisé en ce que** la première étape de réaction a lieu à une valeur de pH comprise entre 5,5 et 6,5.

9. Procédé de synthèse directe selon l'une quelconque des revendications précédentes, **caractérisé en ce que** la première étape de réaction a lieu en présence de résines échangeuses d'ions acides ou d'un mélange de résines échangeuses d'ions acides et basiques.

10. Procédé de synthèse directe selon l'une quelconque des revendications précédentes, **caractérisé en ce que**, dans la première étape de réaction, on ajuste une température de réaction de 70 à 160°C, en particulier de 95 à 100°C.

11. Procédé de synthèse directe selon l'une quelconque des revendications précédentes, **caractérisé en ce que** la réaction est exécutée à raison d'un rapport mélamine/formaldéhyde compris entre 1 : 2,0 et 1 : 4,0.

12. Procédé de synthèse directe selon l'une quelconque des revendications précédentes, **caractérisé en ce que** le pré-condensat de résine de mélamine éthérée concentré, obtenu après l'évaporation, présente une concentration de 95 à 99%.

13. Procédé de synthèse directe selon l'une quelconque des revendications précédentes, **caractérisé en ce que** l'évaporation des composants à poids moléculaire faible se fait en deux étapes.

14. Procédé de synthèse directe selon l'une quelconque des revendications précédentes, **caractérisé en ce que** l'on utilise au moins un diol du type HO-R-OH, ayant des masses molaires de 62 à 20 000 ou un mélange d'au moins deux diols du type HO-R-OH, ayant des masses molaires de 62 à 20 000, le substituant R pouvant présenter une des structures suivantes
C₂-C₁₈-alcylène
-CH(CH₃)-CH₂-O-(C₂-C₁₂)-alcylène-O-CH₂-CH(CH₃)-,
-CH(CH₃)-CH₂-O-(C₂-C₁₂)-arylène-O-CH₂-CH(CH3)-,
-(CH₂-CH₂-CH₂-CH₂-CH₂-CO-)ₓ-(CH₂-CHR)_{y}-,
-[CH₂-CH₂-O-CH₂-CH₂]ₙ-,
-[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-(C₆-C₁₄)-arylène-CO-O-(CH₂)₂₋₈-]ₙ-,
-[(CH₂)₂₋₈-O-CO-(C₂-C₁₂)-alcylène-CO-O-(CH₂)₂₋₈-]ₙ-.
où n = 1 à 200 ; x = 5 à 15 ;
- des séquences contenant de groupements siloxane du type 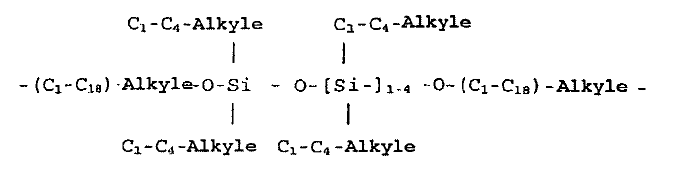
- des séquences de polyesters contenant des groupements siloxane du type
-[(X)ᵣ-O-CO-(Y)ₛ-CO-O-(X)ᵣ]-,
pour lesquels
X = {(CH₂)₂₋₈-O-CO-(C₆-C₁₄)-arylène-CO-O(CH₂)₂₋₈}
ou
-{(CH₂)₂₋₈-O-CO-(C₂-C₁₂)-alcylène-CO-O-(CH₂)₂₋₈-} ; 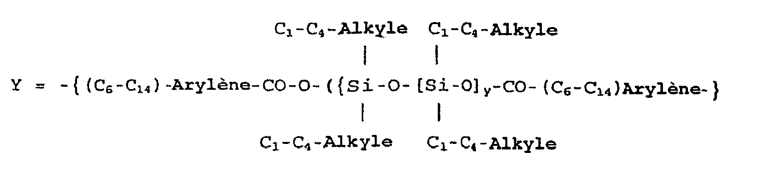
ou 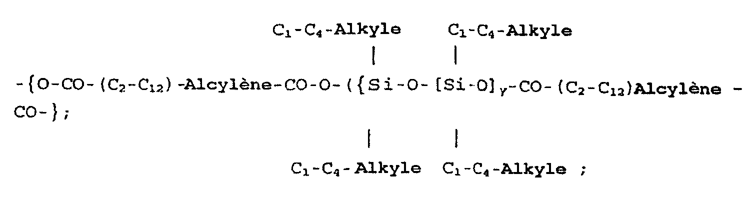 où r = 1 à 70 ; s = 1 à 70 et y = 3 à 50 ;
- des séquences de polyéthers contenant des groupements siloxane du type 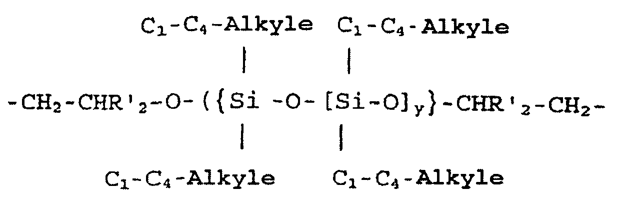 où R'₂ = H, C₁-C₄-alkyle et y = 3 à 50 ;,
- des séquences à base de produits d'addition d'oxydes d'alcylène de la mélamine du type des séquences
2-amino-4,6-di-(C₂-C₄)-alcylènamino-1,3,5-triazine
- des séquences d'éthers phénoliques à base de phénols di-fonctionnels et de diols en C₂-C₈ du type des séquences
-(C₂-C₈) -alcylène-O- (C₆-C₁₈) -arylène-O- (C₂-C₈) -alcylène

15. Procédé de synthèse directe selon l'une quelconque des revendications précédentes, **caractérisé en ce que** les condensats de résines de mélamine éthérées sont des mélanges ayant des masses molaires moyennes de 500 à 2 500 faits à partir de tris(méthoxyméthylamino)triazine et ses oligomères à poids moléculaire élevés.

16. Procédé de synthèse directe selon l'une quelconque des revendications précédentes, **caractérisé en ce qu'**avant et/ou pendant l'opération de concentration, c'est-à-dire avant la première et/ou la deuxième étape d'évaporateur et/ou après l'opération de concentration, c'est-à-dire avant la deuxième étape de réaction, on ajoute au pré-condensat de résine de mélamine des acides et/ou des anhydrides d'acides dissous dans les alcools ou l'eau.

17. Procédé de synthèse directe selon l'une quelconque des revendications précédentes, **caractérisé en ce que** le pétrisseur est formé en tant qu'extrudeuse travaillant en continu, au moins partiellement auto-nettoyante avec dégazage sous vide.

18. Procédé de synthèse directe selon l'une quelconque des revendications précédentes, **caractérisé en ce que** l'on utilise en tant que pétrisseur une extrudeuse à vis double avec des zones de dégazage.

19. Procédé de synthèse directe selon l'une quelconque des revendications précédentes, **caractérisé en ce que**, dans le pétrisseur en mode continu, on incorpore jusqu'à 75% en masse de charges et/ou de fibres de renforcement, des polymères réactifs supplémentaires du type copolymère de l'éthylène, des copolymères d'anhydride de l'acide maléique, des copolymères d'anhydride de l'acide maléique modifiés, des poly(méth)acrylates, des polyamides, des polyesters et/ou des polyuréthanes ainsi que jusqu'à 2% en masse, à chaque fois par rapport aux condensats de résines de mélamine éthérées, d'agents de stabilisation, d'agents d'absorption des rayons UV et/ou d'adjuvants.

20. Procédé de synthèse directe selon l'une quelconque des revendications précédentes, **caractérisé en ce que** la première étape de réaction est effectuée dans une cuve à agitation ou dans un réacteur en mode continu.

21. Procédé de synthèse directe selon l'une quelconque des revendications précédentes, **caractérisé en ce que** le procédé est effectué en mode continu ou en mode discontinu.

22. Procédé de synthèse directe selon l'une quelconque des revendications précédentes, **caractérisé en ce que** les condensats de résines de mélamine éthérées sont exempts de groupements -NH-CH₂-O-CH₂-NH- reliés aux cycles de la triazine.

23. Utilisation de condensats de résines de mélamine éthérées, fabriqués conformément à un procédé de synthèse directe selon au moins l'une des revendications 1 à 22, en vue de la mise en oeuvre à l'état fondu, en particulier en tant qu'adhésif thermofusible, et en vue de la fabrication de plaques, de tubes, de profilés, de pièces moulés par injection, de fibres, de revêtements et de substances alvéolaires, ou en vue de la mise en oeuvre à partir de la solution ou de la dispersion en tant qu'adhésif, résine d'imprégnation, résine de laque ou résine de laminage ou en vue de la fabrication de mousses, de micro capsules ou de fibres.

24. Produits en résines de mélamine, fabriqués à l'aide d'un condensat de résine de mélamine éthérée grâce à un procédé de synthèse directe selon l'une quelconque des revendications 1 à 22.
